# EUROPEAN PATENT APPLICATION

(11) **EP 1 683 684 A1**
(43) Date of publication of application: **26.07.2006**
(21) Application number: 05100398.6
(22) Date of filing: 21.01.2005
(51) Int. Cl.: B60R 21/01

(54) **Checkable seat occupancy sensor**

(71) Applicant: IEE INTERNATIONAL ELECTRONICS & ENGINEERING S.A., 6468 Echternach (LU)
(72) Inventor: Lorenz, Holger, 54470 Bernkastel (DE)
(74) Representative: Beissel, Jean

(57) **Abstract**

A seat sensor comprises at least two switching elements which are connected in series between two connection lines, each of said connection lines comprising a first end for connecting said connection line to a control unit and a second end. Said at least two switching elements are interconnected by means of an interconnection line having a first and a second end. According to the invention each of said first end and said second end of said interconnection line is connected to one of said connection lines by means of a resistive element.

## Description

### Introduction

The present invention generally relates to a seat occupancy sensor e.g. for use in a safety system of an automotive vehicle, and more specifically to a seat occupancy sensor enabling a check of circuit integrity.

Seat occupancy sensors are nowadays commonly used in automotive vehicles in order to improve the efficiency of secondary seat restraint systems, such as e.g. the vehicle airbags or the seat belt pretension systems. The seat occupancy sensors usually comprise a plurality of individual switching element, which are arranged in an array configuration and associated to a seating surface of the vehicle seat. The individual switching elements are typically configured as pressure sensors, e.g. force sensing resistors, in which an electrical resistance is depending on the force acting on the seat.

In a basic application of those seat occupancy sensors, an actual seat occupancy status is determined by means of the seat occupancy sensors and, in case of a car crash situation, the airbags associated with the respective seat are deployed only if the actual seat occupancy status requires such deployment. In a different application, the signal of the seat occupancy sensors are used in a seat belt warning system for generating a warning signal if a specific vehicle seat is occupied and the corresponding seat belt is not fastened.

A seat sensor adapted for the use in a seat belt reminder system is e.g. disclosed in international patent application PCT/EP2004/051189. The described sensor is specifically adapted for discriminating between a symmetrical activation of the sensor e.g. by a person sitting on the seat, and an asymmetric activation e.g. by an object resting on the seat. For this reason, the disclosed sensor comprises a first group of individual switching elements connected in parallel, which are associated with the left part of the vehicle seat and a second group of individual switching elements connected in parallel, which are associated with the right part of the vehicle seat. Both groups of switching elements are connected in series between two connection lines so as to implement a logical AND-operation. The initially very high electrical resistance of such a sensor will considerably decrease only when at least one switching element of each group is activated.

A disadvantage of the sensor disclosed in this international patent application is that the integrity of the interconnection line between the two groups of switching elements is not checkable. Such integration check is however requested in all sensor applications relating to passenger safety. In fact, a given sensor response "high resistance" may be caused as well by the seat being unoccupied or by one of the connection lines being broken. Accordingly it is very important to be able to distinguish between these two cases.

One possible option for implementing an integrity check is to conduct all connectors back to the control unit connected to the seat sensor so that each of the conducting lines may be individually checked. However such a solution would drastically increase the number of required connection terminals for the seat sensor and thus considerably increase the costs as well of the sensor itself as well of the control unit.

### Object of the invention

The object of the present invention is to provide a seat occupancy sensor, in which the integrity of connection lines is checkable.

### General description of the invention

This object is achieved by a seat sensor according to claim 1. The proposed seat sensor comprises at least two switching elements which are connected in series between two connection lines, each of said connection lines comprising a first end for connecting said connection line to a control unit. Said at least two switching elements are interconnected by means of an interconnection line having a first and a second end. According to the invention each of said first end and said second end of said interconnection line is connected to one of said connection lines by means of a resistive element.

By connecting the first and second ends of the interconnection line to the connection lines, a continuous current path is formed via the starting from the first end of the first connection line via the first resisting element, the interconnection line, the second resisting element to the first end of the second connection line. This continuous current path may be checked even if one or both switching elements have an endless electrical resistance i.e. when no person or object is occupying the seat. It follows that the integrity of the interconnection line may thus be checked by measuring the electrical resistance of the continuous current path.

In practice, the interconnection line is formed by a conductive strip extending between the switching elements to be interconnected. Depending on the embodiment and on possible further functions of this conductive strip in the sensor, the conductive strip may extend beyond the switching elements to be interconnected. The skilled person will appreciate, that in such an embodiment, the first end and second ends of the interconnection line may comprise any two locations of the conductive strip, which are located outside of the portion lying between the switching elements to be interconnected.

It will be apparent to the skilled person that the resistive elements have to be suitably dimensioned so as not to interfere with the occupancy detection operation. The resistive elements are e.g. chosen so as to have an electrical resistance, which lies well above the threshold value for passenger detection. This means that the electrical resistance of an activated switching element will be considerably smaller than the resistance of the resistive element so that when the seat is occupied by a person, the resistive elements are "shunted" by the activated switching elements.

It should be noted that the integrity check of the interconnection line is enabled without an increase of the number of necessary terminals for connecting the seat sensor to an associated control unit. Accordingly the costs for the sensor and for the associated control unit are not significantly increased.

It will further be noted, that the integrity of the interconnection line of the present invention may be checked irrespective of the location at which the interconnection line ends are connected to the connection lines. The checkabi lity of the interconnection line is provided by the simple fact that a continuous current path is formed starting from the first ends of the conducting lines. Thus the interconnection line may be checked even at leas tone of the first and second ends of said interconnection line is connected to the respective connection line between the first end of the connection line and the switching element connected thereon.

In a preferred embodiment of the invention, each of said connection lines comprises a second end, which is located opposite of said first end with respect to the switching elements connected to the connection line, and each of said first end and said second end of said interconnection line is connected, by means of said resistive element, to one of said second ends of said connection lines. As the interconnection line is connected to the second ends of the connecting lines, the entire length of these connecting lines is part of the continuous current path. In this embodiment one can consequently not only check the integrity of the interconnection line but also the integrity of the entire connecting lines. Again it should be noted, that the expression "second end" is used to denote any location of the connecting line, which is located beyond the switching elements connected to the connection line when viewed from the first end. Accordingly the connection line may be checked over the entire effective length, i.e. the entire length between the first end and the location at which the switching elements are connected.

In a possible embodiment of the invention at least one of said two switching elements comprises a plurality of individual switches connected in parallel. By the parallel connection of the individual switches, the individual switches are connected in a logical OR-operation, so that the switching element is activated when one single switch is activated. The plurality of individual switches may be distributed over a predetermined part of the seating surface so as to enlarge the active surface of the seat sensor. It will be appreciated, that the individual switches of the first switching element may e.g. be distributed in the left part of the seating surface while the switches of the second switching element are arranged in a similar manner in the right part of the seating surface.

It will be noted that the parallel connection of the individual switching elements may be implemented independently of the connection lines and the interconnection line. In a preferred embodiment however, the individual switching elements may be connected directly to the connection lines and interconnection line so as to implement the parallel connection. Each individual switch is e.g. co nnected with a first terminal to one of said connection lines and with a second terminal to said interconnection line. This embodiment eliminates the need for further wiring for the parallel connection of the switching element, the integrity of which would otherwise have to be checked separately.

It will be noted that the seat sensor is adapted to be associated with a vehicle seat, e.g. to be integrated into the seat cushion. The switching elements are e.g. associated with the seating surface of the seat, wherein the at least two switching elements are preferably associated to different portions of a vehicle seat.

In an advantageous embodiment of the invention, at least one of said switching elements is configured as a pressure-sensing element. Such pressure sensing elements are commonly known in the art and comprise e.g. a foil-type force sensing resistor.

The resistive element can comprise a fixed resistor or a diode or a combination thereof.

### Detailed description with respect to the figures

The present invention will be more apparent from the following description of several not limiting embodiments with reference to the attached drawings, wherein
- Fig.1:: shows a first layout of an embodiment of a seat sensor according to the invention;
- Fig.2:: shows a second layout of an embodiment of a seat sensor according to the invention;
- Fig.3:: a possible embodiment of a resistive element.

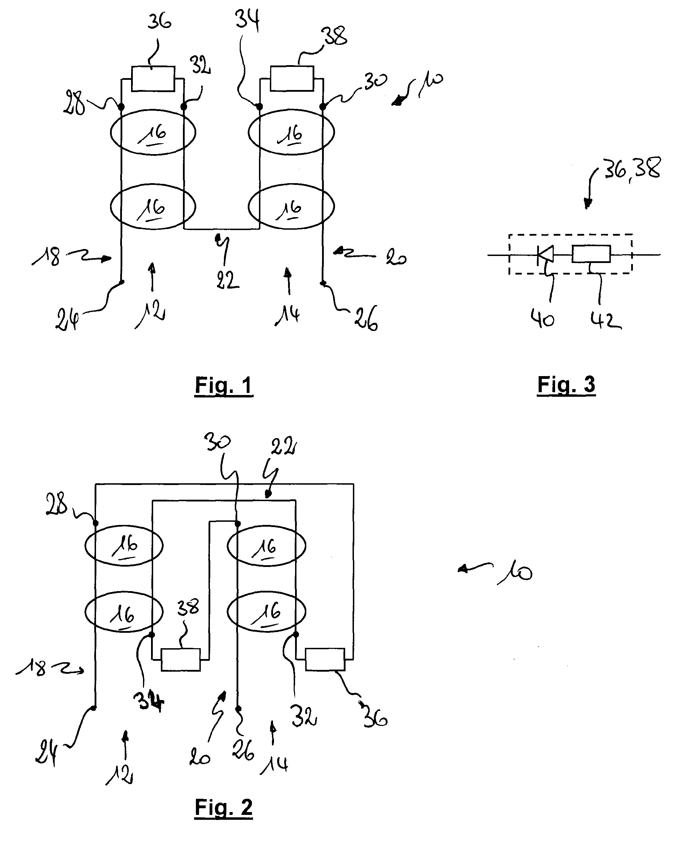

Figures 1 and 2 schematically show two different circuit layouts of seat sensors 10 having checkable connection lines. Each sensor 10 comprises two groups 12 and 14 of individual pressure sensors 16, the groups 12 and 14 being connected in series between two connection lines 18 and 20 by means of an interconnection line 22. Each connection line 18 and 20 comprises a first end 24, 26 for connecting said connection line to a (not shown) control unit and an opposing second end 28 and 30 respectively. The interconnection line 22 also comprises a first end 32 and an opposing second end 34.

The individual pressure sensors 16 of each group 12 and 14 are connected in parallel by directly connecting the two terminals of each pressure sensor to one of the connecting lines 18 and 20 on one side and on the interconnection line 22 on the other side.

In order to form a continuous and checkable current path between the first ends 24 and 26 of the connection lines 18 and 20, the first end 32 of interconnection line 22 is connected to the second end 28 of the first connection line 18 via a first resistive element 36. The second end 34 of interconnection line 22 is likewise connected to the second end 30 of the second connection line 20 via a second resistive element 38.

The resistive elements 36 and 38 may comprise a simple fixed resistor, as is represented in figures 1 and 2. In an alternative embodiment, the resistive elements may also comprise a diode 40 or a combination of a diode 40 and a fixed resistor 42 as is shown in fig. 3. It will be noted that both resistive elements may be identical or have a different configuration. For instance, the electrical resistance of resistive element 36 may be different from the electrical resistance of resistive element 38.

## Claims

1. Seat sensor comprising at least two switching elements connected in series between two connection lines, each of said connection lines comprising a first end for connecting said connection line to a control unit, wherein said at least two switching elements are interconnected by means of an interconnection line having a first and a second end, **characterised in that** each of said first end and said second end of said interconnection line is connected to one of said connection lines by means of a resistive element.

2. Seat sensor according to claim 1, wherein each of said connection lines comprises a second end, said second end being located opposite of said first end with respect to the switching elements connected to the connection line, and wherein each of said first end and said second end of said interconnection line is connected, by means of said resistive element, to one of said second ends of said connection lines.

3. Seat sensor according to any one of claims 1 to 2, wherein at least one of said two switching elements comprises a plurality of individual switches connected in parallel.

4. Seat sensor according to claim 3, wherein each individual switch is connected with a first terminal to one of said connection lines and with a second terminal to said interconnection line.

5. Seat sensor according to any one of claims 1 to 4, wherein said at least two switching elements are associated to different portions of a vehicle seat

6. Seat sensor according to any one of claims 1 to 5, wherein at least one of said switching elements is configured as a pressure sensing element.

7. Seat sensor according to any one of claims 1 to 6, wherein said resistive element comprises a fixed resistor.

8. Seat sensor according to any one of claims 1 to 7, wherein said resistive element comprises a diode.
